# EUROPEAN PATENT SPECIFICATION

(11) **EP 2 310 593 B1**
(45) Date of publication and mention of the grant of the patent: **30.09.2015**
(21) Application number: 09765960.1
(22) Date of filing: 10.06.2009
(51) Int. Cl.: E04D 13/14

(54) **FLEXIBLE PIPE FOR A PIPE CONSTRUCTION EXTENDING THROUGH A ROOF**
FLEXIBLES ROHR FÜR EINE SICH DURCH EIN DACH ERSTRECKENDE ROHRKONSTRUKTION
TUYAU FLEXIBLE POUR UNE CONSTRUCTION DE TUYAU S'ÉTENDANT À TRAVERS UN TOIT

(30) Priority: 16.06.2008 FI 20085590
(43) Date of publication of application: 20.04.2011
(73) Proprietor: SK Tuote Oy, 65610 Mustasaari (FI)
(72) Inventor: SAIKKONEN, Eero, FI-65370 Vaasa (FI)
(74) Representative: Langenskiöld, Tord Karl Walter
(86) International application number: PCT/FI2009/050491
(87) International publication number: WO 2009/153394

(56) References cited:
- EP-A1- 0 339 234
- EP-A2- 0 131 086
- WO-A1-89/05893
- DE-C2- 19 605 462
- US-A- 3 436 880
- US-A- 3 874 138
- US-A- 5 245 804
- US-A- 5 694 724
- US-A1- 2003 037 498

## Description

This invention relates to a flexible pipe for a pipe construction extending through a roof, whereby the flexible pipe is an accordion-like pipe made of rubber and having a cylindrical upper end intended to be slipped onto the lower end of a pipe part extending above the roof, and a cylindrical lower part intended, in turn, to be slipped onto i.e around the upper end of a lower pipe part which ends underneath the roof, said cylindrical parts being attachable to the ends of said pipe parts by means of hose clamps. Such constructions are used when sewer vent pipes, ventilation pipes for air-conditioning, cooker-hood exhaust pipes etc. are passed through the roof out of the building. Due to the flexible pipe, the pipes do not need to be aligned while the accordion-like construction compensates the contractions of the pipes and the movements of the structures.

A drawback of a flexible pipe of the above-mentioned type is a risk of leakage which may occur especially in the winter, when condensate is formed inside the pipe flowing along the wall of the pipe and penetrating partly at the upper part of the flexible pipe, into the space between the cylindrical part of the flexible pipe and the pipe part surrounding said pipe part, a possible water leakage being thus prevented only by a hose clamp.

Such water leakage has been attempted to prevent with a solution in which to the lower end of the flexible pipe a rigid plastic part having a greater thickness than the accordion-like part has been attached, the free end of which has been formed to fit tightly inside the socket of the pipe to be connected. According to one embodiment the accordion-like part of the flexible pipe has been made of plastics, whereby the wall thickness has been less than one millimetre. The accordion-like part has been attached to the thick cylindrical plastic part by gluing. Drawbacks of such flexible pipe are its complicated manufacture and laborious mounting; furthermore, there is a risk that the glue-joint will break. In addition, higher expenses are caused by the fact that according to the provisions the pipe end to be connected must be provided with a socket.

Also from EP 0 339 234 A1 a flexible pipe is known having cylindrical lower end intended to be slipped into the upper end of a lower pipe part. The problem with such a lower end is that it has to be dimensioned very exactly is also the pipe part into which it is intended to be slipped, in order to have a sufficiently strong and secure joint.

The object of the present invention is to provide such a flexible pipe in which these problems have been eliminated. This object is achievable by a pipe which is characterized in that inside the cylindrical lower end of the flexible pipe a cylindrical collar has been mounted having an outer diameter corresponding to the inner diameter of the pipe part to be connected to the lower end of the flexible pipe and said collar being joined in its upper end tightly to the inner surface of the cylindrical lower end so that between the cylindrical collar and the cylindrical part surrounding the collar a receiving space is formed to receive the upper end of the pipe part to be connected thereto. Due to this, a flexible pipe is obtained being simply to manufacture and secure to use, whereby the flexibility of the rubber allows the wall thickness of the flexible pipe to be of the same dimension as the wall of the pipe to be connected, which flexible pipe can be manufactured in one manufacturing step without gluing or other joining of the components. Due to the above-described construction the flexible pipe according to the invention, the pipe to which it is to be connected does not have to be a socket pipe.

In order to facilitate mounting of the flexible pipe, the cylindrical collar in the lower end of the flexible pipe is arranged to extend farther out of the flexible pipe than the cylindrical part surrounding it. Due to this it is possible to see during the mounting step that the cylindrical collar does not get wrinkled but the free end of it can be inserted into the pipe to be connected before the cylindrical part surrounding the same is slipped onto said pipe to be connected. Due to the cylindrical collar water dripping from the upper end of the pipe will flow downwards along the pipe and remain permanently inside the pipe thus being prevented from penetrating to the outer surface of the pipe at the point of the host clip clamping the cylindrical part. Thus, the only function of the host clamp clamping the cylindrical part of the lower end of the flexible pipe is to arrest the flexible pipe to the pipe to be connected thereto.

Suitable material for the manufacture of the flexible pipe is so-called EPDM rubber, i.e. ethylene-propylene-diene monomer rubber.

In the following the invention is described in more detail with reference to the accompanying drawings, wherein
Fig. 1 shows an example of the construction to which the flexible pipe according to the invention has been mounted, seen from three different directions,
Fig. 2 shows a pespective view of the construction of figure 1, seen diagonally from above,
Fig. 3 shows the detail E of figure 1 in enlarged scale,

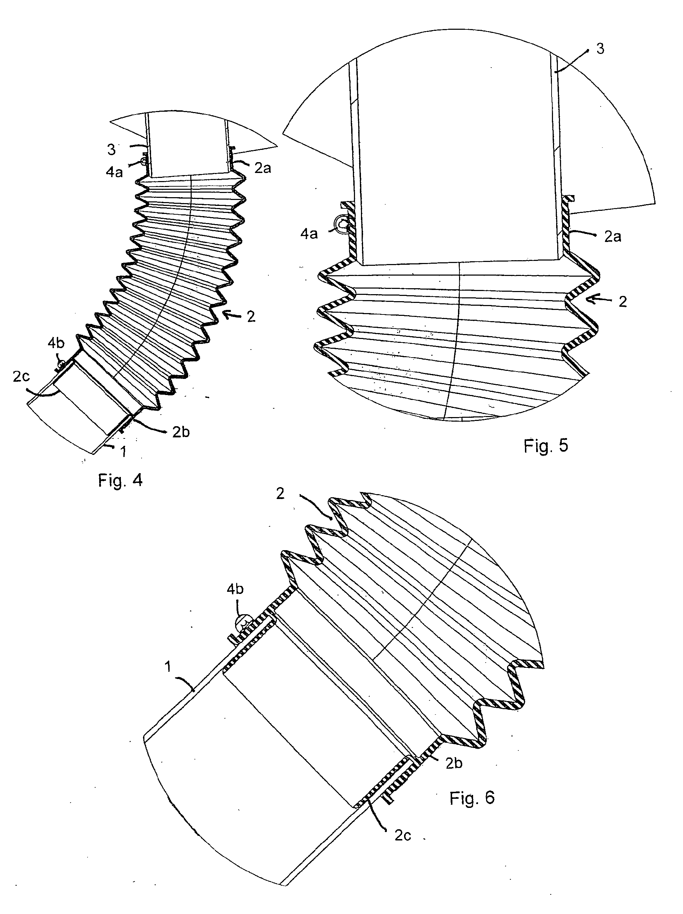

Fig. 4 shows the detail D of figure 1 in enlarged scale,
Fig. 5 shows the detail C of figure 1 in even more enlarged scale, and
Fig. 6 shows the detail B of figure 1 in even more enlarged scale.

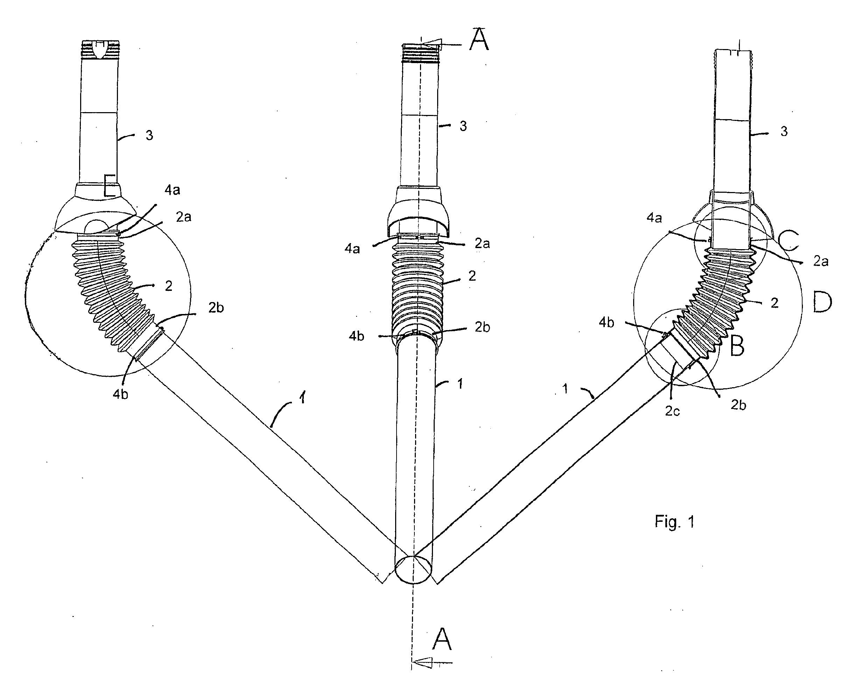

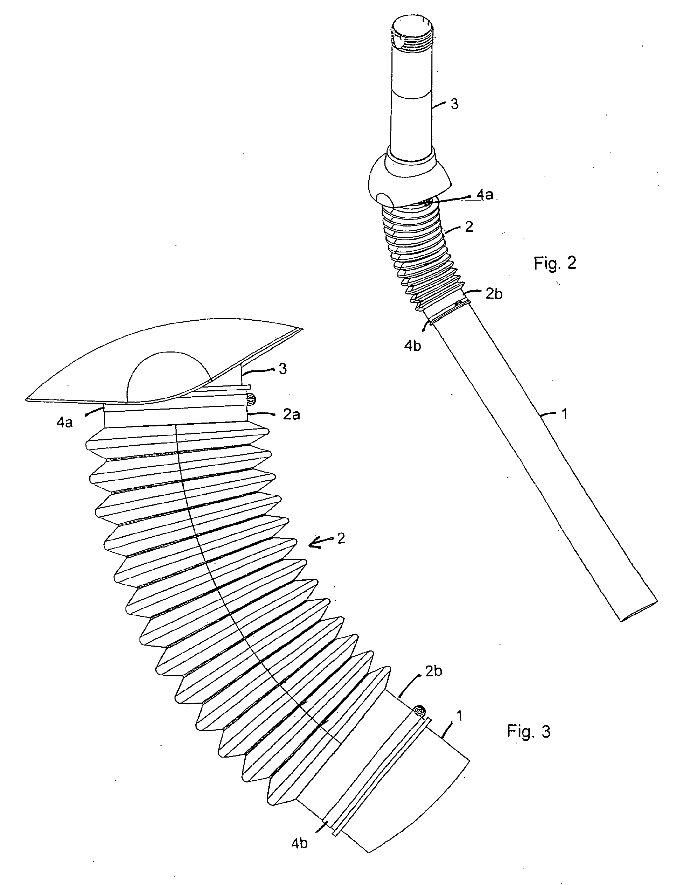

The pipe construction shown in figures 1 and 2 passing through a roof, comprises a socket-free lower pipe part 1 for e.g. a ventilation pipe, said pipe part 1 ending underneath the roof, a flexible pipe 2 according to the invention mounted to the upper end of said pipe part 1 as well as a pipe part 3 extending above the roof and being mounted to the upper end of the flexible pipe.

The flexible pipe is an accordion-like pipe, made of rubber, comprising a cylindrical upper end 2a intended to be slipped onto the lower end of the pipe part 3 extending above the roof, and a cylindrical lower end 2b intended, in turn, to be slipped onto the upper end of the lower pipe part 1 which ends underneath the roof. Said cylindrical parts 2a and 2b are mountable to the ends of said pipe part 3 and said pipe part 1 by means of hose clamps 4a and 4b.

According to the invention, inside the cylindrical lower end 2b of the flexible pipe a cylindrical collar 2c has been arranged, having an outer diameter corresponding to the inner diameter of the pipe part 1 to be connected to the lower end of the flexible pipe 2, and said collar being joined in its upper end tightly to the inner surface of the cylindrical lower end 2b so that between the cylindrical collar 2c and the cylindrical part 2b surrounding the collar a cylindrical receiving space is formed to receive the upper end of the pipe part 1 to be connected. This construction enables effective prevention of any water leakage from the pipe, since the water flowing along the inner walls of the flexible pipe will flow from the inner surface of the cylindrical part 2b to the inner surface of the cylindrical collar 2c and does not come into contact with the inner surface of the pipe part 1 until it reaches the lower end of the cylindrical collar 2c.

According to a preferred embodiment, the cylindrical collar 2c of the flexible pipe 2 extends farther away from the accordion-like part of the flexible pipe 2 than the cylindrical part 2b surrounding it which facilitates mounting of the pipe, because the free end of the cylindrical collar can be mounted inside the lower pipe part 1 before the cylindrical part 2b will be slipped onto the upper part of said pipe part 1. This enables to secure that the cylindrical collar 2c does not get wrinkled during mounting.

The flexible pipe 2 is manufactured from EPDM rubber, i.e. ethylene-propylene-diene monomer rubber, the durability (strength) and flexibility properties of which have been proved suitable for use in the flexible pipe according to the invention.

## Claims

1. A flexible pipe (2) for a pipe construction extending through a roof, the flexible pipe being an accordion-like pipe, made of rubber, having a cylindrical upper end (2a) intended to be slipped onto the lower end of a pipe part (3) extending above the roof, and a cylindrical lower part (2b) intended, in turn, to be slipped onto i.e. around the upper end of a lower pipe part (1) that ends underneath the roof, said cylindrical parts (2a, 2b) being attachable to the ends of said pipe parts (3,1) by means of host clamps (4a, 4b), **characterized in that** inside the cylindrical lower part (2b) of the flexible pipe (2) a cylindrical collar (2c) has been arranged extending farther out of the flexible pipe (2) than the cylindrical part (2b) surrounding it and having an outer diameter corresponding to the inner diameter of the pipe part (1) to be connected to the lower end of the flexible pipe (2) and said collar being joined in its upper end tightly to the inner surface of the cylindrical lower end (2b) so that between the cylindrical collar (2c) and the cylindrical part (2b) surrounding the collar a receiving space is formed to receive the upper end of the pipe part (1) to be connected thereto.

2. The flexible pipe (2) according to claim 1, **characterized in that** as material of the pipe EPDM rubber has been used.

## Patentansprüche

1. Flexibles Rohr (2) für eine sich durch ein Dach erstreckende Rohrkonstruktion, wobei das flexible Rohr ein aus Gummi hergestelltes ziehharmonikaähnliches Rohr mit einem zylinderförmigen oberen Ende (2a) ist, das dafür vorgesehen ist, auf ein unteres Ende eines Rohrabschnitts (3) geschoben zu werden, der sich über dem Dach erstreckt, und mit einem zylinderförmigen unteren Abschnitt (2b), der dafür vorgesehen ist im Gegenzug auf das, d. h. um das, obere Ende eines unteren Rohrabschnitts (1) geschoben zu werden, das unterhalb des Dachs endet, wobei die zylinderförmigen Abschnitte (2a, 2b) durch Schlauchklemmen (4a, 4b) an den Enden der Rohrabschnitte (3,1) befestigbar sind;
**dadurch gekennzeichnet, dass**
im Inneren des zylinderförmigen unteren Abschnitts (2b) des flexiblen Rohrs (2) eine zylinderförmige Manschette (2c) angeordnet ist, die sich weiter aus dem flexiblen Rohr (2) nach außen erstreckt als der die Manschette umgebende zylinderförmige untere Abschnitt (2b) und einen Außendurchmesser hat, der dem Innendurchmesser des mit dem unteren Ende des flexiblen Rohrs (2) zu verbindenden Rohrabschnitts (1) entspricht, und wobei die Manschette an ihrem oberen Ende enganliegend mit der Innenfläche des zylinderförmigen unteren Abschnitts (2b) verbunden ist, so dass zwischen der zylinderförmigen Manschette (2c) und dem die Manschette umgebenden zylinderförmigen unteren Abschnitt (2b) ein Aufnahmeraum zum Aufnehmen des damit zu verbindenden oberen Endes des Rohrabschnitts (1) gebildet wird.

2. Flexibles Rohr (2) nach Anspruch 1, **dadurch gekennzeichnet, dass** als Material des Rohrs EPDM-Kautschuk verwendet wird.

## Revendications

1. Tuyauterie flexible (2) destinée à une construction de tuyauterie s'étendant à travers un toit, la tuyauterie flexible étant une tuyauterie du type en accordéon, réalisée en caoutchouc, présentant une extrémité supérieure cylindrique (2a) pouvant coulisser sur l'extrémité inférieure d'une partie de tuyauterie (3) s'étendant au-dessus du toit, et une partie inférieure cylindrique (2b) destinée elle-même à coulisser sur, c'est-à-dire, autour de, l'extrémité supérieure d'une partie de tuyauterie inférieure (1) qui se termine au-dessous du toit, lesdites parties cylindriques (2a, 2b) pouvant être fixées sur les extrémités desdites parties de tuyauterie (3, 1) au moyen d'éléments de blocage intégrés (4a, 4b), **caractérisée en ce que**, à l'intérieur de la partie inférieure cylindrique (2b) de la tuyauterie flexible (2), un collier cylindrique (2c) est agencé de manière à s'étendre plus loin sur la tuyauterie flexible (2) que la partie cylindrique (2b) l'entourant et présentant un diamètre externe correspondant au diamètre interne de la partie de tuyauterie (1) à raccorder à l'extrémité inférieure de la tuyauterie flexible (2) et ledit collier étant relié solidement à son extrémité supérieure sur la surface interne de l'extrémité inférieure cylindrique (2b) de telle sorte que, entre le collier cylindrique (2c) et la partie cylindrique (2b) entourant le collier, un espace de réception est formé afin de recevoir l'extrémité supérieure de la partie de tuyauterie (1) à raccorder à celle-ci.

2. Tuyauterie flexible (2) selon la revendication 1, **caractérisée en ce que**, en tant que matériau pour la tuyauterie, du caoutchouc à base d'EPDM est utilisé.
